# EUROPÄISCHE PATENTSCHRIFT

(11) **EP 4 087 770 B1**
(45) Veröffentlichungstag und Bekanntmachung des Hinweises auf die Patenterteilung: **21.05.2025**
(21) Anmeldenummer: 21700248.4
(22) Anmeldetag: 05.01.2021
(51) Int. Cl.: B62D 9/00, B62D 5/04, B62D 15/00

(54) **KRAFTFAHRZEUGLENKSYSTEM, KRAFTFAHRZEUG UND VERFAHREN ZUR STEUERUNG EINES KRAFTFAHRZEUGLENKSYSTEMS**
MOTOR VEHICLE STEERING SYSTEM, MOTOR VEHICLE AND METHOD FOR CONTROLLING A MOTOR VEHICLE STEERING SYSTEM
SYSTÈME DE DIRECTION DE VÉHICULE AUTOMOBILE, VÉHICULE AUTOMOBILE ET PROCÉDÉ DE COMMANDE D'UN SYSTÈME DE DIRECTION DE VÉHICULE AUTOMOBILE

(30) Priorität: 10.01.2020 DE 102020100449
(43) Veröffentlichungstag der Anmeldung: 16.11.2022
(73) Patentinhaber: thyssenkrupp AG, 45143 Essen (DE); thyssenkrupp Presta Aktiengesellschaft, 9492 Eschen (LI)
(72) Erfinder: LAPIS, Leonard, 9466 Sennwald (CH); MIANO, Carlo Mario, 9492 Eschen (LI); POLMANS, Kristof, 6464 Tarrenz (AT)
(74) Vertreter: thyssenkrupp Intellectual Property GmbH
(86) Internationale Anmeldenummer: PCT/EP2021/050047
(87) Internationale Veröffentlichungsnummer: WO 2021/140080

(56) Entgegenhaltungen:
- DE-A1- 102016 001 592
- US-A1- 2010 076 650
- US-A1- 2011 231 052
- US-A1- 2013 253 793
- US-A1- 2018 273 005
- US-A1- 2019 270 478

## Beschreibung

Die Erfindung betrifft ein Kraftfahrzeuglenksystem, ein Kraftfahrzeug und ein Verfahren zur Steuerung eines Kraftfahrzeuglenksystems. Ein Kraftfahrzeuglenksystem gemäß dem Oberbegriff des Patentanspruchs 1 ist beispielsweise aus der DE 10 2017 114 494 A1 bekannt.

Bei Lenksystemen für Kraftfahrzeuge in einer Steer-by-Wire-Ausführung ist die Stellung der gelenkten Räder indirekt mit dem Lenkeingabemittel, beispielsweise einem Lenkrad gekoppelt. Das Lenkrad und die lenkbaren Räder sind durch elektrische Signale miteinander verbunden. Dabei wird der Lenkwunsch des Fahrers von einem Lenkwinkelsensor erfasst. In Abhängigkeit dieses Fahrerlenkwunsches wird durch einen Lenksteller die Stellung der lenkbaren Räder geregelt.

Um instabile Fahrsituationen, wie beispielsweise ein Übersteuern oder ein Untersteuern eines Kraftfahrzeugs zu vermeiden, ist das sogenannte "Torque-Vectoring" bekannt. Dabei wird ein Antriebsmoment zwischen einem linken und einem rechten Fahrzeugrad mittels eines speziell ausgebildeten Differenzialgetriebes verteilt, um dem Übersteuern oder dem Untersteuern entgegenzuwirken. Ein Steer-by-Wire-Lenksystem eines Kraftfahrzeugs, bei dem Schlupf bzw. Über- oder Untersteuern durch Torque-Vectoring verhindert wird, ist zum Beispiel in der eingangs genannten DE 10 2017 114 494 A1 beschrieben. Hierbei handelt es sich um ein Lenksystem für Kraftfahrzeuge mit Zweiradlenkung. Das Lenksystem gemäß der DE 10 2017 114 494 A1 hat den Nachteil, dass bei einem Ausfall bzw. einer Fehlfunktion der Vorderradlenkung das Fahrzeug nicht mehr steuerbar ist. Besonders bei einer Kurvenfahrt des Fahrzeugs kann dies ein Abkommen des Fahrzeugs von der Straße bewirken und somit zu einem Unfall führen.

Aus dem Stand der Technik sind ferner Kraftfahrzeuge mit Vierradlenkung bekannt, deren Vorderräder mit Torque-Vectoring angetrieben werden.

Die EP 3 153 382 A1 offenbart beispielsweise ein Torque-Vectoring-System, das auf die Vorderräder wirkt. Die Hinterräder können nach Wunsch gelenkt werden. Die Antriebs- und die Bremsverteilung über die Hinterachse erfolgt über den Lenkwinkel der Hinterräder. Das Torque-Vectoring ist dabei nur für die Vorderräder vorgesehen. Der Lenkwinkel der Hinterräder wird in Abhängigkeit der Differenz zwischen einem Soll-Schwimmwinkel und einem Ist-Schwimmwinkel angepasst. Hierbei ist nachteilig, dass für den Fall oder den Zustand, dass der Vorderradantrieb nicht mehr steuerbar ist und eine Lenkung der Vorderräder ausfällt, das Fahrzeug unkontrollierbar ist. Dies führt zu einer unerwünscht gefährlichen Fahrsituation.

Das Dokument US-A-2010/076650 offenbart ein Kraftfahrzeuglenksystem gemäß dem Oberbegriff des Anspruchs 1.

Der Erfindung liegt daher die Aufgabe zu Grunde, ein Kraftfahrzeuglenksystem anzugeben, durch das bei einem Ausfall bzw. einer Fehlfunktion von lenkrelevanten Komponenten ein Kraftfahrzeug kontrolliert steuerbar ist. Der Erfindung liegt ferner die Aufgabe zu Grunde ein Kraftfahrzeug und ein Verfahren zur Steuerung eines Kraftfahrzeuglenksystems anzugeben.

Erfindungsgemäß wird diese Aufgabe im Hinblick auf das Kraftfahrzeuglenksystem durch den Gegenstand des Anspruchs 1 gelöst. Hinsichtlich des Kraftfahrzeugs des Verfahrens zur Steuerung eines Kraftfahrzeuglenksystems wird die vorstehend genannte Aufgabe jeweils durch den Gegenstand des Anspruchs 7 (Kraftfahrzeug) und des Anspruchs 8 (Verfahren) gelöst. Vorteilhafte Weiterbildungen ergeben sich aus den Unteransprüchen.

Konkret wird die Aufgabe durch ein Kraftfahrzeuglenksystem eines Kraftfahrzeuges mit einer Vorderradlenkeinheit, einer Lenksteuereinheit, zwei Vorderrädern und einem oder mehreren Hinterrädern gelöst. Vorzugsweise weist das Kraftfahrzeuglenksystem zwei Hinterräder auf. Die Vorderradlenkeinheit weist ein Lenkrad und wenigstens eine Lenkstelleinrichtung auf, die mit wenigstens einem der Vorderräder zur Übertragung einer Lenkbewegung gekoppelt ist. Die Lenksteuereinheit ist mit dem Lenkrad zur Erfassung eines Lenkwinkels signalverbunden. Zusätzlich ist die Lenksteuereinheit dazu konfiguriert, den Lenkwinkel des Lenkrades zu erfassen und die Lenkstelleinrichtung derart anzusteuern, dass die Lenkstelleinrichtung den erfassten Lenkwinkel auf das wenigstens eine Vorderrad überträgt. Es sind mindestens zwei Aktuatoren vorgesehen, die dazu angepasst sind, auf eines oder beide der Vorderräder und/oder auf eines oder mehrerer der Hinterräder einzuwirken. Die

Lenksteuereinheit weist eine Verarbeitungseinheit auf, die dazu konfiguriert ist:
- in einem Fahrbetrieb einen aktuellen Bahnverlauf des Kraftfahrzeugs zu bestimmen;
- im Fahrbetrieb eine Fehlfunktion der Vorderradlenkeinheit und/oder der Lenksteuereinheit zu detektieren;
- im Falle der Detektion einer Fehlfunktion wenigstens einen der Aktuatoren auszuwählen; und
- den wenigstens einen ausgewählten Aktuator anzusteuern, sodass im Fahrbetrieb der aktuelle Bahnverlauf des Kraftfahrzeugs mit einer geringen Abweichung erhalten bleibt,
wobei das Kraftfahrzeuglenksystem mit einem Datenspeicher ausgestattet ist, wobei die Lenksteuereinheit mit dem Datenspeicher signalverbunden ist und in dem Daten zu den Aktuatoren hinterlegt sind, wobei im Datenspeicher Daten der Aktuatoren betreffend die Reaktionszeit, Wirkungsweise und/oder Verfügbarkeit gespeichert sind, und/oder im Datenspeicher Tabellenwerte zu Steuergrößen und/oder Daten zur Erreichung bestimmter Lenkwinkelwerte gespeichert sind, wobei die Verarbeitungseinheit dazu konfiguriert ist, die Daten aus dem Datenspeicher auszulesen und einen oder mehrere Aktuatoren abhängig von einer jeweiligen Fehlfunktion und/oder einer Fahrsituation auszuwählen, so dass durch die hinterlegten Daten bei einer Fehlfunktion der oder die für die entsprechende Fahrsituation am besten geeigneten Aktuatoren ermittelt und ausgewählt werden.

Die Erfindung hat den Vorteil, dass das Kraftfahrzeug im Fahrbetrieb bei einem Ausfall bzw. einer Fehlfunktion von Komponenten der Vorderradlenkeinheit bzw. der Lenksteuereinheit sicher und stabil auf der Fahrbahn gehalten wird. Das Kraftfahrzeuglenksystem bildet somit neben dem Hauptlenksystem zum Lenken des Kraftfahrzeugs im Fahrbetrieb auch ein Redundanzsystem zum Lenken des Kraftfahrzeugs bei einer Fehlfunktion des Hauptlenksystems. Dadurch werden kritische Fahrsituationen im Wesentlichen verhindert und die Wahrscheinlichkeit eines Unfalls reduziert. Das Kraftfahrzeuglenksystem bewirkt somit eine Erhöhung der Fahrzeugsicherheit im Fahrbetrieb.

Im Rahmen der Erfindung ist unter dem aktuellen Bahnverlauf eine Bewegungslinie zu verstehen, an der sich das Fahrzeug im Fahrbetrieb entlang bewegt bzw. der das Fahrzeug im Fahrbetrieb folgt. Der aktuelle Bahnverlauf entspricht dabei einem Soll-Verlauf eines Weges, den das Fahrzeug im Fahrbetrieb zurücklegt bzw. dem das Fahrzeug im Fahrbetrieb folgt. Der aktuelle Bahnverlauf kann den bis zum Zeitpunkt der Bestimmung erfassten Bahnverlauf und den ab dem Zeitpunkt der Bestimmung vorausbestimmten Bahnverlauf des Fahrzeugs umfassen.

Die Bestimmung des aktuellen Bahnverlaufs des Kraftfahrzeugs erfolgt in Abhängigkeit des Lenkwinkels des Lenkrads und einer Fahrgeschwindigkeit des Kraftfahrzeugs. Es ist denkbar, dass der aktuelle Bahnverlauf in Abhängigkeit weiterer zusätzlicher Fahrzeugparameter ermittelt wird. Das Kraftfahrzeuglenksystem weist zusätzlich eine Erfassungseinrichtung zum Erfassen einer Fahrgeschwindigkeit des Kraftfahrzeugs auf. Die Erfassungseinrichtung ist dazu angepasst, im Fahrbetrieb eine Fahrgeschwindigkeit des Fahrzeugs zu erfassen. Die Erfassungseinrichtung kann die Fahrgeschwindigkeit des Kraftfahrzeugs fortlaufend, insbesondere kontinuierlich oder nach definierten Zeitabschnitten erfassen. Die Erfassungseinrichtung kann die Fahrgeschwindigkeit beispielsweise durch einen Sensor eines Fahrzeugsteuersystems des Kraftfahrzeugs erfassen. Dazu kann die Erfassungseinrichtung mit dem Fahrzeugsteuersystem oder direkt mit dem Sensor signalverbunden sein.

Zur Bestimmung des aktuellen Bahnverlaufs kann die Verarbeitungseinheit mit der Erfassungseinrichtung signalverbunden sein. Die Verarbeitungseinheit kann dazu konfiguriert sein, die ermittelte Fahrgeschwindigkeit des Kraftfahrzeugs aus der Erfassungseinrichtung auszulesen, die ermittelte Fahrgeschwindigkeit zusammen mit dem erfassten Lenkwinkel des Lenkrads zu verarbeiten und daraus den aktuellen Bahnverlauf des Kraftfahrzeugs zu berechnen.

Unter einem Fahrbetrieb ist der Zustand des Kraftfahrzeugs zu verstehen, bei dem das Kraftfahrzeug gegenüber einer Fahrbahn bewegt wird. Dabei ist der Betrag der Fahrgeschwindigkeit größer Null. Bevorzugt beträgt die Geschwindigkeit mehr als eine Schrittgeschwindigkeit, d.h. mehr als 5 km/h.

Um ein unzulässiges Lenkverhalten des Fahrzeugs frühzeitig zu erkennen und/oder die Ursache für eine kritische Bahnverlaufsabweichung des Fahrzeugs zu ermitteln, ist die Verarbeitungseinheit dazu konfiguriert, die Vorderradlenkeinheit und/oder die Lenksteuereinheit in Bezug auf eine Fehlfunktion zu überprüfen. Die Verarbeitungseinheit detektiert dabei beispielsweise, ob die Vorderradlenkeinheit bzw. die Lenksteuereinheit eine unkontrollierte bzw. unzulässige Lenkbewegung auf die Vorderräder ausübt und/oder eine oder beide Einheiten zumindest teilweise ausgefallen sind. Die Verarbeitungseinheit kann dazu konfiguriert sein, im Fahrbetrieb eine Fehlfunktion der Vorderradlenkeinheit und/oder der Lenksteuereinheit kontinuierlich oder erst nach dem Überschreiten eines Grenzwerts der Abweichung vom aktuellen Bahnverlauf des Fahrzeugs zu detektieren bzw. überprüfen.

Eine derartige Fehlfunktion kann aus einem Defekt des Lenkrads, der Lenkstelleinrichtung und/oder anderer mechanischer Bauteile resultieren, die im Fahrbetrieb die Lenkbewegung vom Lenkrad auf die Vorderräder übertragen. Ferner kann eine Fehlfunktion durch einen Defekt von elektronischen Bauteilen der Lenksteuereinheit hervorgerufen werden. Beispielsweise kann die Vorderradlenkeinheit nicht steuerbar sein, die Lenkstelleinrichtung blockieren oder frei drehen. Das Lenkrad kann dabei ordnungsgemäß funktionieren.

Wird eine Fehlfunktion der Vorderradlenkeinheit und/oder der Lenksteuereinheit detektiert, wählt die Verarbeitungseinheit wenigstens einen der Aktuatoren aus und steuert diesen/diese an, sodass im Fahrbetrieb der aktuelle Bahnverlauf des Kraftfahrzeugs mit einer möglichst geringen Abweichung erhalten bleibt. Mit anderen Worten bleibt der aktuelle Bahnverlauf des Fahrzeugs im Fahrbetrieb mit einer minimalen Abweichung erhalten.

Die Verarbeitungseinheit steuert also den jeweiligen Aktuator bei einer Fehlfunktion derart an, dass diese auf wenigstens ein Vorderrad und/oder wenigstens ein Hinterrad einwirken. Dabei übertragen die Aktuatoren auf wenigstens ein Vorderrad und/oder wenigstens ein Hinterrad eine Kraft und/oder ein Moment, sodass das Kraftfahrzeug dem aktuellen Bahnverlauf mit einer geringen Abweichung weiter folgt. Die Aktuatoren können jeweils eine Bremse oder ein Antrieb sein. Es ist auch denkbar, dass der jeweilige Aktuator ein Schwingungsdämpfer, insbesondere ein Stoßdämpfer ist. Durch das Heranziehen von bereits im Kraftfahrzeug vorhandenen Aktuatoren entfallen zusätzliche Aktuatoren, die lediglich für im Falle einer Fehlfunktion zum Einsatz kommen. Dadurch werden ein Bauraum am Kraftfahrzeug eingespart sowie die Kosten reduziert.

Unter einer Abweichung ist zu verstehen, dass sich im Fahrbetrieb der Bahnverlauf des Kraftfahrzeugs vom ermittelten aktuellen Bahnverlauf bspw. durch die detektierte Fehlfunktion der Vorderradlenkeinheit und/oder der Lenksteuereinheit derart unterscheidet, dass ein vordefinierter Grenzwert für die maximale Abweichung überschritten wird. Die Abweichung vom aktuellen Bahnverlauf kann kleiner als 10% sein. Bevorzugt ist die Abweichung des Fahrzeugs vom aktuellen Bahnverlauf kleiner als 5%.

Ferner ist unter einer Abweichung zu verstehen, wenn sich im Fahrbetrieb ein Fahrzeugwinkel von einem Lenkwinkel des Lenkrads bspw. durch die detektierte Fehlfunktion der Vorderradlenkeinheit und/oder der Lenksteuereinheit derart unterscheidet, dass ein vordefinierter Grenzwert für die maximale Abweichung überschritten wird. Die Abweichung des Fahrzeugwinkels vom Lenkwinkel des Lenkrads kann kleiner als 10° sein. Bevorzugt ist die Abweichung des Fahrzeugwinkels vom Lenkwinkel des Lenkrads kleiner als 5°. Besonders bevorzugt ist die Abweichung des Fahrzeugwinkels vom Lenkwinkel des Lenkrads kleiner als 2°. Die zulässigen Abweichungen können auch im Vorfeld, beispielsweise in Versuchen, festgelegt werden.

Abweichungen, die innerhalb der vorstehend genannten Grenzen liegen, gelten als geringe Abweichungen.

Allerdings kann es vorkommen, dass die Abweichungen nur für einen gewissen Zeitraum, ab Eintreten der Fehlfunktion, noch innerhalb der zulässigen Werte gehalten werden können. Für diesen Fall kann, insbesondere muss, ein Notfallprogramm vorgesehen sein, mit dem ein kontrolliertes Anhalten des Fahrzeuges ermöglicht wird.

Der Fahrzeugwinkel im Fahrbetrieb ergibt sich im Wesentlichen aus dem über das Lenkrad eingetragenen Lenkwinkel und die Fahrgeschwindigkeit sowie insbesondere die Massenträgheit des Fahrzeugs. Es ist denkbar, dass der Fahrzeugwinkel im Fahrbetrieb des Fahrzeugs auch noch durch weitere Fahrzeugsowie Umgebungsparameter beeinflusst wird.

Bevorzugt bildet das erfindungsgemäße Kraftfahrzeuglenksystem ein Steer-by-Wire-Lenksystem. Dabei sind das Lenkrad und die Lenkstelleinrichtung zur Übertragung einer Lenkbewegung indirekt miteinander verbunden. Mit anderen Worten ist das Lenkrad mit der Lenkstelleinrichtung zur Übertragung der Lenkbewegung elektrisch signalverbunden. Das Lenkrad ist mit der Lenkstelleinrichtung somit nicht mechanisch gekoppelt, um die Lenkbewegung auf die Lenkstelleinrichtung und somit auf die Vorderräder zu übertragen.

Bei einer bevorzugten Ausführungsform sind genau zwei Aktuatoren vorgesehen, die dazu angepasst sind, auf eines oder beide der Vorderräder und/oder auf ein oder mehrere der Hinterräder einzuwirken. Mit anderen Worten übertragen bei einer Fehlfunktion genau zwei Aktuatoren eine Kraft und/oder ein Moment auf wenigstens eines der Vorderräder und/oder wenigstens eines der Hinterräder, um das Kraftfahrzeug auf dem aktuellen Bahnverlauf mit einer geringen Abweichung zu halten. Alternativ ist denkbar, dass drei oder vier Aktuatoren vorgesehen und dazu angepasst sind, auf eines oder beide der Vorderräder und/oder auf eines oder mehrere der Hinterräder einzuwirken. Vorteilhaft kann hierbei im Fahrbetrieb das Kraftfahrzeug bei einer Fehlfunktion durch lediglich zwei Aktuatoren sicher gelenkt werden. Dabei kann die Verarbeitungseinheit im Fahrbetrieb die zwei Aktuatoren aus mehreren Aktuatoren des Kraftfahrzeugs auswählen, die für den jeweiligen Lenkeinsatz am besten geeignet sind.

Bei einer weiteren bevorzugten Ausführungsform sind für jedes der Vorderräder und/oder für jedes der Hinterräder jeweils mindestens zwei Aktuatoren vorgesehen, die dazu angepasst sind, auf das jeweilige Rad einzuwirken. Mit anderen Worten können jedem der Vorderräder und/oder jedem der Hinterräder wenigstens zwei Aktuatoren zugeordnet sein, um im Fahrbetrieb bei einer Fehlfunktion auf das Rad einzuwirken. Dadurch kann jedes der Räder im Falle einer Fehlfunktion durch mindestens zwei Aktuatoren angesteuert werden, sodass das Fahrzeug sicher und stabil auf der Fahrbahn gehalten werden kann.

Es können für jedes der Vorderräder und/oder für jedes der Hinterräder jeweils genau zwei Aktuatoren vorgesehen sein, um auf das jeweilige Rad einzuwirken. Es können für jedes der Vorderräder und/oder für jedes der Hinterräder jeweils mehr als zwei Aktuatoren vorgesehen sein, um auf das jeweilige Rad einzuwirken. Das Einwirken auf das jeweilige Rad zur Einleitung einer Lenkbewegung des Fahrzeugs, kann durch eine Einzelrad-Schwingungsdämpfer-Ansteuerung, eine Einzelradfederansteuerung, eine Einzelrad-Radneigungsansteuerung und/oder ein Einzelrad-Hilfslenkaktuatoransteuerung erfolgen.

Erfindungsgemäß ist ein Datenspeicher vorgesehen. Die Lenksteuereinheit ist dabei mit dem Datenspeicher signalverbunden. Erfindungsgemäß sind in dem Datenspeicher Daten zu den Aktuatoren hinterlegt. Der Datenspeicher kann Teil einer Fahrzeugsteuerung oder Teil der Lenksteuereinheit sein. Alternativ kann der Datenspeicher als separates Bauteil, insbesondere getrennt von einer übergeordneten Steuereinheit vorgesehen sein. Im Datenspeicher werden Daten der Aktuatoren betreffend die Reaktionszeit, Wirkungsweise und/oder Verfügbarkeit gespeichert.

Die Verfügbarkeit des jeweiligen Aktuators kann abhängig von der jeweiligen Fahrsituation im Fahrbetrieb sein. Die Fahrsituation kann beispielsweise ein Bremsen, ein Beschleunigen, eine Geradeausfahrt und/oder eine Kurvenfahrt umfassen. Zusätzlich oder alternativ können im Datenspeicher Tabellenwerte zu Steuergrößen und/oder Daten zur Erreichung bestimmter Lenkwinkelwerte gespeichert sein. Die Verarbeitungseinheit wird dazu konfiguriert, die Daten aus dem Datenspeicher auszulesen und einen oder mehrere Aktuatoren abhängig von der jeweiligen Fehlfunktion und/oder der Fahrsituation auszuwählen. Durch die hinterlegten Daten werden bei einer Fehlfunktion der oder die für die entsprechende Fahrsituation am besten geeigneten Aktuatoren schnell und einfach ermittelt und ausgewählt.

Vorzugsweise ist wenigstens einer der Aktuatoren Teil einer Einzelradlenkeinrichtung der Vorderradlenkeinheit, wobei der Aktuator mit einem Vorderrad gekoppelt ist. Weiter vorzugsweise ist wenigstens einer der Aktuatoren Teil einer Hinterradlenkeinheit, wobei der Aktuator mit wenigstens einem Hinterrad gekoppelt ist. Die Hinterradlenkeinheit kann eine Einzelradlenkeinrichtung oder eine Achslenkeinrichtung bilden. Die Einzelradlenkeinrichtung überträgt einen Lenkwinkel des Lenkrads auf das Vorderrad bzw. das Hinterrad. Bei einer Fehlfunktion kann durch die Einzelradlenkeinrichtung das Fahrzeug schnell und einfach gelenkt werden, sodass ein Bahnverlauf mit nur geringer Abweichung erhalten bleibt.

Bei einer bevorzugten Ausführungsform ist wenigstens einer der Aktuatoren ein Vorderradantrieb und/oder ein Hinterradantrieb, der mit wenigstens einem der Räder drehmomentübertragend gekoppelt ist. Alternativ können der Vorderradantrieb und/oder der Hinterradantrieb jeweils einen Einzelradantrieb zur Übertragung eines Drehmoments auf ein einzelnes Rad bilden. Der wenigstens eine Aktuator kann dabei ein Einzelradantrieb sein, der das einzelne Rad antreibt. Mit anderen Worten kann der Einzelradantrieb ein Drehmoment auf das einzelne Rad übertragen. Bei einer Fehlfunktion kann der Einzelradantrieb auf das Rad ein Drehmoment derart übertragen, dass das Kraftfahrzeug auf dem aktuellen Bahnverlauf mit einer geringen, insbesondere minimalen, Abweichung gehalten wird. Dazu kann der Einzelradantrieb durch die Lenksteuereinheit ansteuerbar sein. Der Einzelradantrieb kann die Umfangsgeschwindigkeit des einzelnen Rads erhöhen oder verringern. Der Einzelradantrieb kann durch einen Elektromotor gebildet sein. Ein derartiger Aktuator kann bei einer Fehlfunktion eine Lenkbewegung des Fahrzeugs einleiten. Das Fahrzeug wird dadurch sicher und stabil auf der Fahrbahn gehalten.

Der Vorderradantrieb und/oder der Hinterradantrieb können alternativ jeweils einen Achsantrieb zur Übertragung eines Drehmoments auf zwei Räder bilden. Der wenigstens eine Aktuator kann auch ein Teil des Achsantriebs sein, der die beiden Räder, insbesondere Vorderräder oder Hinterräder antreibt. Mit anderen Worten kann der Einzelradantrieb ein Drehmoment auf die beiden Räder übertragen. Bei einer Fehlfunktion kann der Achsantrieb auf die beiden Räder jeweils ein Drehmoment derart übertragen, dass das Kraftfahrzeug auf dem aktuellen Bahnverlauf mit einer geringen, insbesondere minimalen, Abweichung gehalten wird. Dazu kann der Achsantrieb durch die Lenksteuereinheit ansteuerbar sein. Der Achsantrieb kann die Umfangsgeschwindigkeit der beiden Räder erhöhen. Der Achsantrieb kann mit einem Verbrennungsmotor und/oder einem Elektromotor gekoppelt sein, um auf die beiden Räder jeweils ein Drehmoment zu übertragen.

Bei einer weiteren bevorzugten Ausführungsform ist wenigstens einer der Aktuatoren Teil einer Bremseinheit, die mit wenigstens einem der Vorderräder und/oder wenigstens einem der Hinterräder bremskraftübertragend koppelbar und/oder gekoppelt sind. Die Bremseinheit kann eine Einzelradbremse zum Abbremsen wenigstens eines der Vorderräder oder eine Einzelradbremse zum Abbremsen wenigstens eines der Hinterräder bilden. Bei einer Fehlfunktion kann die Einzelradbremse auf das Rad eine Bremskraft übertragen derart, dass das Kraftfahrzeug auf dem aktuellen Bahnverlauf mit einer geringen, insbesondere minimalen, Abweichung gehalten wird. Mit anderen Worten kann die Einzelradbremse die Umfangsgeschwindigkeit des einzelnen Rads abbremsen.

Alternativ kann die Bremseinheit eine Achsbremse zum Abbremsen beider Vorderräder oder eine Achsbremse zum Abbremsen beider Hinterräder bilden. Bei einer Fehlfunktion kann die Achsbremse auf die beiden Vorderräder oder die beiden Hinterräder jeweils eine Bremskraft übertragen derart, dass das Kraftfahrzeug auf dem aktuellen Bahnverlauf mit einer geringen, insbesondere minimalen, Abweichung gehalten wird. Mit anderen Worten kann die Achsbremse die Umfangsgeschwindigkeit der beiden Vorderräder oder der beiden Hinterräder abbremsen. Die Einzelradbremse oder die Achsbremse kann durch die Lenksteuereinheit ansteuerbar sein. Durch die vorgenannten Bremseinheiten kann bei einer Fehlfunktion durch ein gezieltes Abbremsen eines oder mehrere Räder eine Lenkbewegung des Fahrzeugs eingeleitet werden. Das Fahrzeug kann dadurch bei einer Fehlfunktion kontrolliert gelenkt werden.

Bevorzugt ist wenigstens einer der Aktuatoren Teil einer Achslenkeinrichtung, insbesondere einer Achssteuereinheit, die mit wenigstens einem der Vorderräder oder wenigstens einem der Hinterräder über eine Achsgeometrie koppelbar oder gekoppelt ist und/oder über einen Schwingungsdämpfer und/oder über eine Fahrzeugfeder wirkverbindbar oder wirkverbunden ist. Mit anderen Worten ist die Achslenkeinrichtung durch die Wirkung des Schwingungsdämpfers und/oder die Wirkung der Fahrzeugfeder mit wenigstens einem der Vorderräder oder wenigstens einem der Hinterräder koppelbar.

Nach dem nebengeordneten Anspruch 7 betrifft die Erfindung ein Kraftfahrzeug mit wenigstens einem erfindungsgemäßen Kraftfahrzeuglenksystem. Hierbei wird auf die im Zusammenhang mit dem Kraftfahrzeuglenksystem erläuterten Vorteile verwiesen. Darüber hinaus kann das Kraftfahrzeug alternativ oder zusätzlich einzelne oder eine Kombination mehrerer zuvor in Bezug auf das Kraftfahrzeuglenksystem genannter Merkmale aufweisen.

Nach dem nebengeordneten Anspruch 8 betrifft die Erfindung ein Verfahren zur Steuerung eines Kraftfahrzeuglenksystems eines Kraftfahrzeuges mit einer Erfassungsseinrichtung zum Erfassen der Fahrgeschwindigkeit des Kraftfahrzeugs, einer Vorderradlenkeinheit, einer Lenksteuereinheit, zwei Vorderrädern und einem oder mehreren Hinterrädern. Die Vorderradlenkeinheit weist ein Lenkrad und wenigstens eine Lenkstelleinrichtung auf, die mit wenigstens einem der Vorderräder zur Übertragung einer Lenkbewegung gekoppelt ist. Die Lenksteuereinheit ist mit dem Lenkrad zur Erfassung eines Lenkwinkels signalverbunden. Die Lenksteuereinheit erfasst den Lenkwinkel des Lenkrades und steuert die Lenkstelleinrichtung derart an, dass die Lenkstelleinrichtung den erfassten Lenkwinkel auf das wenigstens eine Vorderrad überträgt. Dazu sind mindestens zwei Aktuatoren vorgesehen, die auf eines oder beide der Vorderräder und/oder auf eines oder mehrere der Hinterräder einwirken, wobei das Verfahren folgende weitere Schritte aufweist:
- Fortlaufendes Ermitteln eines aktuellen Bahnverlaufs und einer Fahrgeschwindigkeit des Kraftfahrzeugs in einem Fahrbetrieb des Kraftfahrzeugs;
- Fortlaufendes Bestimmen während des Fahrbetriebs, ob der ermittelte aktuelle Bahnverlauf mit dem über das Lenkrad aufgeprägten Verlauf des Lenkwinkels korreliert, wobei aus dem aufgeprägten Lenkwinkelverlauf und einem ermittelten Fahrgeschwindigkeitsverlauf ein zu erwartender Bahnverlauf ermittelt wird;
- Ermitteln eines Zustands einer Fehlfunktion, für den Fall, dass eine Abweichung zwischen dem zu erwartenden Bahnverlauf vom ermittelten aktuellen Bahnverlauf grösser als ein vordefinierter Wert ist;
- Auswählen eines oder mehrerer der Aktuatoren aus einer Anzahl von verfügbaren Aktuatoren, für den Fall, dass eine Fehlfunktion ermittelt ist, wobei die Daten aus dem Datenspeicher ausgelesen und einen oder mehrere Aktuatoren abhängig von einer jeweiligen Fehlfunktion und/oder einer Fahrsituation ausgewählt werden, so dass durch die hinterlegten Daten bei einer Fehlfunktion der oder die für die entsprechende Fahrsituation am besten geeigneten Aktuatoren ermittelt und ausgewählt werden; und
- Bestimmen einer Stellgröße für jeden Aktuator durch eine Recheneinrichtung und Ausgeben der Stellgröße an den jeweiligen Aktuator derart, dass in Zusammenwirken aller jeweils zum Einsatz kommender, insbesondere ausgewählter, Aktuatoren die Abweichung des ermittelten aktuellen Bahnverlaufs vom erwarteten Bahnverlaufs verringert wird. Mit anderen Worten werden die ausgewählten zum Einsatz kommenden Aktuatoren mit den Stellgrößen derart angesteuert, dass die Aktuatoren die Abweichung vom ermittelten Bahnverlauf verkleinert. Der ermittelte aktuelle Bahnverlauf kann vom erwarteten Bahnverlauf weniger als 10% abweichen. Bevorzugt kann der ermittelte aktuelle Bahnverlauf vom erwarteten Bahnverlauf weniger als 5% abweichen.

Unter "fortlaufend" ist zu verstehen, dass der Vorgang des Ermittelns,

Bestimmens oder Erfassens kontinuierlich, insbesondere zeitlich durchgängig oder nach definierten Zeitabschnitten wiederholt wird.

Unter dem "aufgeprägten Verlauf des Lenkwinkels" ist der durch den Fahrer über das Lenkrad eingebrachte Lenkwinkel über einen Zeitraum zu verstehen, der auf die Räder übertragen wird und eine Lenkbewegung des Fahrzeugs zur Folge hat.

Wie vorstehend beschrieben, wird der zu erwartende Bahnverlauf auf Basis vom Lenkwinkelverlauf und der Fahrgeschwindigkeit ermittelt bzw. berechnet. Dies kann durch eine Verarbeitungseinheit der Lenksteuereinheit erfolgen.

Die Fahrgeschwindigkeit kann beispielsweise durch einen Sensor eines Fahrzeugsteuersystems des Kraftfahrzeugs erfasst werden. Die Erfassungseinrichtung kann dazu mit dem Fahrzeugsteuersystem oder direkt mit dem Sensor signalverbunden sein.

Unter den "verfügbaren Aktuatoren" sind jene Aktuatoren zu verstehen, die im Fahrbetrieb bei einer Fehlfunktion zur Verringerung der Abweichung eingesetzt oder angesteuert werden können, ohne die Grundfunktion des jeweiligen Aktuators für die jeweilige Fahrsituation zu beeinträchtigen.

Bei einer bevorzugten Ausführungsform des erfindungsgemäßen Verfahrens sind ein Datenspeicher und eine Verarbeitungseinheit vorgesehen, wobei im Datenspeicher Eingangsgrößen und/oder Stellcharakteristika für einen oder mehrere der Aktuatoren hinterlegt sind und die Verarbeitungseinheit aus den hinterlegten Daten geeignete Stellgrößen für die Aktuatoren auswählt.

Bei einer weiteren bevorzugten Ausführungsform des erfindungsgemäßen Verfahrens liest die Verarbeitungseinheit einen Betriebszustand der Lenksteuereinheit und/oder der Vorderradlenkeinheit und/oder einen Betriebszustand zumindest zwei der vorhandenen Aktuatoren aus und wählt auf Basis dieser Betriebszustände die jeweiligen Aktuatoren aus den mehreren Aktuatoren aus, um im Fahrbetrieb bei einer Fehlfunktion die Abweichung des ermittelten aktuellen Bahnverlaufs vom zu erwartenden Bahnverlauf gering zu halten.

Vorzugsweise ist wenigstens einer der Aktuatoren Teil einer Einzelradlenkeinrichtung der Vorderradlenkeinheit oder einer Hinterradlenkeinheit, wobei die Verarbeitungseinheit über den jeweiligen Aktuator eine Lenkbewegung auf wenigstens eines der Vorderräder und/oder wenigstens eines der Hinterräder einprägt.

Im Rahmen der Erfindung wird unter "Einprägen" die Ansteuerung des jeweiligen Aktuators verstanden, um eine Lenkbewegung auf das jeweilige Rad zu übertragen.

Weiter vorzugsweise ist wenigstens einer der Aktuatoren Teil einer Hinterradlenkeinheit, wobei der Aktuator mit wenigstens einem Hinterrad gekoppelt ist/wird. Dabei prägt die Verarbeitungseinheit über den jeweiligen Aktuator eine Lenkbewegung auf das gekoppelte Hinterrad.

Bei einer bevorzugten Ausführungsform ist wenigstens einer der Aktuatoren ein Vorderradantrieb, der mit wenigstens einem der Vorderräder drehmomentübertragend gekoppelt ist/wird, wobei die Verarbeitungseinheit über den jeweiligen Aktuator ein Antriebsmoment auf das gekoppelte Vorderrad einprägt.

Bei einer weiteren bevorzugten Ausführungsform ist wenigstens einer der Aktuatoren ein Hinterradantrieb, der mit wenigstens einem der Hinterräder drehmomentübertragend gekoppelt ist/wird, wobei die Verarbeitungseinheit über den jeweiligen Aktuator ein Antriebsmoment auf das gekoppelte Hinterrad einprägt.

Bevorzugt ist wenigstens einer der Aktuatoren Teil einer Bremseinheit, die mit wenigstens einem der Vorderräder oder wenigstens einem der Hinterräder bremskraftübertragend gekoppelt wird, wobei die Verarbeitungseinheit über den jeweiligen Aktuator ein Bremsmoment auf das gekoppelte Vorderrad und/oder das gekoppelte Hinterrad einprägt.

Weiter bevorzugt ist wenigstens einer der Aktuatoren Teil einer Achssteuereinheit, die mit wenigstens einem der Vorderräder oder wenigstens einem der Hinterräder über eine Achsgeometrie gekoppelt wird und/oder über wenigstens eines Schwingungsdämpfers und/oder über wenigstens eine Fahrzeugfeder wirkverbunden wird. Die Verarbeitungseinheit leitet vorzugsweise über den jeweiligen Aktuator eine Stellgröße zur Veränderung der Achsgeometrie und/oder des Schwingungsdämpfers und/oder der Fahrzeugfeder ein, um auf das gekoppelte Vorderrad und/oder auf das gekoppelte Hinterrad eine lenkwirksame Bewegung einzuprägen.

Zu den Vorteilen des Verfahrens zur Steuerung eines Kraftfahrzeuglenksystems wird auf die im Zusammenhang mit dem Kraftfahrzeuglenksystem erläuterten Vorteile verwiesen. Darüber hinaus kann das Verfahren alternativ oder zusätzlich einzelne oder eine Kombination mehrerer zuvor in Bezug auf das Kraftfahrzeuglenksystem genannte Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie das erfindungsgemäße Kraftfahrzeuglenksystem ausgestaltet sein kann.

In diesen zeigen,
- Fig. 1: eine schematische Darstellung eines Kraftfahrzeuglenksystems, insbesondere Steer-by-Wire-Lenksystems, nach einem erfindungsgemäßen Ausführungsbeispiel;
- Fig. 2: eine schematische Darstellung eines Kraftfahrzeuglenksystems, insbesondere Steer-by-Wire-Lenksystems, nach einem weiteren erfindungsgemäßen Ausführungsbeispiel;
- Fig. 3: eine schematische Darstellung des Kraftfahrzeuglenksystems, insbesondere Steer-by-Wire-Lenksystems gemäß Fig. 2; und
- Fig. 4: eine schematische Darstellung eines Kraftfahrzeuglenksystems, insbesondere Steer-by-Wire-Lenksystems, nach einem weiteren erfindungsgemäßen Ausführungsbeispiel;

Bei der nachfolgenden Beschreibung werden für gleiche und gleich wirkende Teile dieselben Bezugsziffern verwendet.

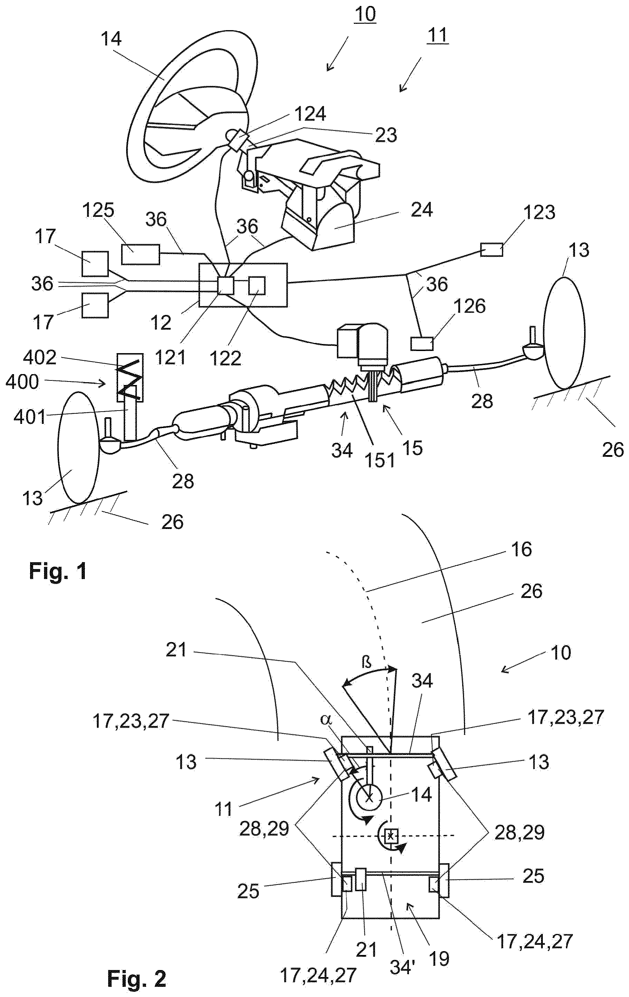

Fig. 1 zeigt ein Kraftfahrzeuglenksystem 10 nach einem erfindungsgemäßen Ausführungsbeispiel, wobei das Kraftfahrzeuglenksystem 10 ein Steer-by-Wire-Lenksystem ist. An einer Lenkwelle 23 ist ein Drehwinkelsensor 124 angebracht, welcher den durch Drehen eines Lenkrads 14 aufgebrachten Fahrerlenkwinkel a erfasst. Es kann aber zusätzlich auch ein Lenkmoment erfasst werden. Des Weiteren ist an der Lenkwelle 23 ein Feedback-Aktuator 24 angebracht, der dazu dient, die Rückwirkungen von einer Fahrbahn 26 auf das Lenkrad 14 zu simulieren und somit dem Fahrer eine Rückmeldung über das Lenk- und Fahrverhalten des Fahrzeugs zu geben. Der Feedback-Aktuator 24 ist mit der Lenksteuereinheit 12 elektrisch signalverbunden und wird durch die Lenksteuereinheit 12 zur Simulation der Rückwirkungen der Fahrbahn 26 angesteuert.

Der Fahrerlenkwunsch wird über den vom Drehwinkelsensor 124 gemessenen Drehwinkel α der Lenkwelle 23 über Signalleitungen 36 an eine Lenksteuereinheit 12 weitergegeben, die in Abhängigkeit von weiteren Eingangsgrößen eine Lenkstelleinrichtung 15 elektrisch ansteuert, die die Stellung der lenkbaren Vorderräder 13 steuert. Entsprechend der Ausführung gemäß Fig. 2 sind auch Hinterräder 25 ansteuerbar. Des Weiteren können mit dem Begriff lenkbare Räder 13, 25 sowohl zwei Vorderräder 13 oder zwei Hinterräder 25 oder alle Räder 13 und 25 umfasst sein. Die Lenkstelleinrichtung 15 wirkt entsprechend der Ausführung nach Fig. 1 über ein Lenkstangen-Lenkgetriebe 34, wie beispielsweise einem Zahnstangen-Lenkgetriebe, sowie über Spurstangen 28 und anderen Bauteilen mittelbar auf die gelenkten Räder 13. Die Lenkstelleinrichtung 15 ist Teil einer Vorderradlenkeinheit 11. Die Lenkstelleinrichtung kann alternativ Teil einer Hinterradlenkeinheit 19 sein.

Ferner sind zwei Aktuatoren 17 vorgesehen, die mit der Lenksteuereinheit 17 zur Ansteuerung über Signalleitungen 36 signalübertragend verbunden sind. Es ist denkbar, dass mehr als zwei Aktuatoren 17 vorgesehen sind. Die Aktuatoren 17 können Teil des Kraftfahrzeuglenksystems 10 oder allgemeine Aktuatoren eines Kraftfahrzeugs sein. Die Aktuatoren 17 können jeweils ein Einzelradantrieb oder Teil eines Achsantriebs, eine Einzelradbremse, eine Achsbremse, Teil einer Einzelradlenkeinrichtung oder Teil einer Achslenkeinrichtung sein. Alternativ können die Aktuatoren 17 jeweils ein Einzelrad-Schwingungsdämpfer, eine Einzelrad-Fahrzeugfeder, eine Einzelrad- oder ein Einzelrad-Hilfslenkaktuator sein. Die Aktuatoren 17 sind dazu angepasst, auf wenigstens eines der Räder 13, 25, insbesondere eines der Vorderräder 13 und/oder eines der Hinterräder 25 einzuwirken, sodass im Fahrbetrieb eine Lenkbewegung des Fahrzeugs eingeleitet bzw. das Fahrzeug gelenkt wird.

Die Lenksteuereinheit 12 umfasst eine Verarbeitungseinheit 121 und einen Datenspeicher 122, die miteinander zum Auslesen und zum Abspeichern von Daten signalverbunden sind. Die Verarbeitungseinheit 121 ist dazu konfiguriert, Daten aus dem Datenspeicher auszulesen und Daten in dem Datenspeicher abzuspeichern. Im Datenspeicher können Daten von den Aktuatoren 17 betreffend die Reaktionszeit, Wirkungsweise und/oder Verfügbarkeit gespeichert sein. Die Verfügbarkeit des jeweiligen Aktuators 17 kann abhängig von der jeweiligen Fahrsituation im Fahrbetrieb sein. Die Fahrsituation kann beispielsweise Bremsen, Beschleunigen, Geradeausfahrt und/oder Kurvenfahrt umfassen. Zusätzlich oder alternativ können im Datenspeicher 122 Tabellenwerte zu Steuergrößen und/oder Daten zur Erreichung bestimmter Lenkwinkelwerte gespeichert sein.

Ferner ist die Verarbeitungseinheit 121 mit einer Fahrzeugsteuerung 125 des Kraftfahrzeugs signalverbunden, um eine Fahrgeschwindigkeit des Fahrzeugs zu erfassen bzw. auszulesen. Dazu kann die Fahrzeugsteuerung 125 mit einem Sensor zur Erfassung der Fahrgeschwindigkeit signalgekoppelt sein. Gemäß Fig. 1 ist die Lenksteuereinheit 12 mit einem Sensor 123 zur Erfassung der Fahrgeschwindigkeit direkt signalgekoppelt. Konkret ist eine nicht dargestellte Erfassungseinrichtung mit dem Sensor 123 zum Erfassen der Fahrgeschwindigkeit verbunden. Es ist denkbar, dass alternativ die Verarbeitungseinheit 121 mit dem Sensor 123 zum Erfassen der Fahrgeschwindigkeit signalverbunden ist.

Zusätzlich kann ein Sensor 126 zur Bestimmung des Verstellwinkels der gelenkten Räder 13 vorgesehen sein. Beispielsweise kann die Position einer Zahnstange 151 der Lenkstelleinrichtung 15 gemessen werden.

In Fig. 1 ist ferner ein Schwingungsdämpfer 400, umfassend einen Stoßdämpfer 401 und eine Fahrzeugfeder 402 veranschaulicht.

In Fig. 2 ist ein Kraftfahrzeuglenksystem 10 nach einem weiteren erfindungsgemäßen Ausführungsbeispiel schematisch dargestellt. Fig. 2 zeigt das Kraftfahrzeuglenksystem 10 in einem Kraftfahrzeug 110. Das Kraftfahrzeug 110 ist bei der Fahrt auf einer Fahrbahn 26 gezeigt. Mit anderen Worten befindet sich das Kraftfahrzeug 110 im Fahrbetrieb.

Im Unterschied zum Kraftfahrzeuglenksystem 10 gemäß Fig. 1 weist das Kraftfahrzeuglenksystem 10 gemäß Fig. 2 zwei lenkbare Vorderräder 13 und zwei lenkbare Hinterräder 25 auf. Das Kraftfahrzeuglenksystem 10 gemäß Fig. 2 weist eine Vorderradlenkeinheit 11 und eine Hinterradlenkeinheit 19 auf. Die Vorderradlenkeinheit 11 umfasst ein Zahnstangen-Lenkgetriebe 34, das über Spurstangen mit den beiden Vorderrädern 13 zur Übertragung einer Lenkbewegung gekoppelt ist. Das Zahnstangen-Lenkgetriebe 34 ist, wie in Fig. 1 beschrieben, mit dem Lenkrad 14 zur Übertragung eines Lenkwinkels a auf die Vorderräder 13 verbunden bzw. gekoppelt.

Ferner weist die Hinterradlenkeinheit 19 ein weiteres Zahnstangen-Lenkgetriebe 34' auf, das über Spurstangen mit den beiden Hinterrädern 25 zur Übertragung einer Lenkbewegung gekoppelt ist. Zur Betätigung des Zahnstangen-Lenkgetriebes 34' der Hinterradlenkeinheit 19 ist eine Achslenkeinrichtung 21 vorgesehen, die mit dem Zahnstangen-Lenkgetriebe 34' kraftübertragend gekoppelt ist.

Ferner ist gemäß Fig. 2 an jedem Rad 13, 25 ein Einzelradantrieb 27 vorgesehen, der mit dem zugehörigen Rad 13, 25 drehmomentübertragend gekoppelt ist. Zusätzlich ist an jedem Rad 13, 25 eine Einzelradbremse 29 angeordnet, das mit dem jeweiligen Rad 13, 25 bremskraftübertragend koppelbar ist. Jeweils die Einzelradantriebe 27, die Einzelradbremsen 29 und die Achslenkeinrichtung 21 bilden jeweils einen der Aktuatoren 17. Im Unterschied zum Kraftfahrzeuglenksystem 10 gemäß Fig. 1 sind somit bei dem Kraftfahrzeuglenksystem 10 gemäß Fig. 2 mehr als zwei Aktuatoren 17 vorgesehen. Im Beispiel gemäß Fig. 2 sind insgesamt zehn Aktuatoren vorgesehen: vier Einzelradbremsen 29, vier Einzelradantriebe 27, zwei Achslenkeinrichtungen 21. Die Einzelradbremsen 29 können dabei durch eine Bremsanlage und/oder durch eine Einrichtung zur Bremsverteilung des gesamten Bremsmoments auf die einzelnen Räder gebildet werden. Ebenso können die Einzelradantriebe durch eine Einrichtung zur Antriebsverteilung des gesamten Antriebsmoments auf die einzelnen Räder gebildet werden.

Fig. 2 zeigt das Kraftfahrzeug 110 mit dem Kraftfahrzeuglenksystem 10 im Fahrbetrieb, wobei sich das Fahrzeug 110 vor einer Kurvenfahrt befindet. Zu diesem Zeitpunkt trägt der Fahrer über das Lenkrad 14 einen Lenkwinkel α ein, der durch die Lenksteuereinheit 12 über den Lenkwinkelsensor 124 erfasst wird. Die Lenksteuereinheit 12 steuert anschließend die Lenkstelleinrichtung 15 der Vorderradlenkeinheit 11 an, die über das Zahnstangen-Lenkgetriebe 34 sowie über die Spurstangen 28 an die beiden Vorderräder 13 überträgt. Daraus resultiert ein gewünschter Fahrzeugwinkel β, der dem durch den Fahrer erwarteten Winkel des Fahrzeuges entspricht.

Die Verarbeitungseinheit 121 ermittelt im Fahrbetrieb des Kraftfahrzeugs 110 fortlaufend einen aktuellen Bahnverlauf 16 und eine Fahrgeschwindigkeit des Kraftfahrzeugs 110. Der aktuelle Bahnverlauf 16 ist in Fig. 1 gestrichelt dargestellt. Des Weiteren bestimmt die Verarbeitungseinheit 121 im Fahrbetrieb fortlaufend, ob der ermittelte aktuelle Bahnverlauf 16 des Kraftfahrzeugs 110 mit dem über das Lenkrad 14 aufgeprägten Verlauf des Lenkwinkels α korreliert, d.h. im Wesentlichen übereinstimmt. Aus dem aufgeprägten Lenkwinkelverlauf und einem ermittelten Fahrgeschwindigkeitsverlauf, durch die fortlaufende bzw. kontinuierliche Ermittlung, berechnet die Verarbeitungseinheit 121 einen zu erwartenden Bahnverlauf. Die Verarbeitungseinheit 121 vergleicht den ermittelten aktuellen Bahnverlauf 16 und den berechneten zu erwartenden Bahnverlauf des Kraftfahrzeugs 110. Für den Fall, dass der aktuelle Bahnverlauf 16 vom zu erwartenden Bahnverlauf derart abweicht, dass ein vordefinierter Grenzwert überschritten wird, stellt die Verarbeitungseinheit 121 eine Fehlfunktion der Vorderradlenkeinheit 11 fest. Eine Fehlfunktion kann vorliegen, wenn der zu erwartende Bahnverlauf vom aktuellen Bahnverlauf 16 um mehr als 10% abweicht. Alternativ kann eine Fehlfunktion vorliegen, wenn der zu erwartende Bahnverlauf vom aktuellen Bahnverlauf 16 um mehr als 5% abweicht.

Eine Fehlfunktion kann aber auch ohne Abweichung vom Bahnverlauf 16 durch eine Detektion eines Fehlsignals in der Steuerung bestimmt werden. Beispielweise kann ein Überstrom oder ein Unterstrom festgestellt werden und daraus unmittelbar das Vorliegen einer Fehlfunktion festgestellt werden.

Wird eine Fehlfunktion festgestellt, ermittelt die Verarbeitungseinheit 121 die von den Aktuatoren 17 zur Verfügung stehenden Aktuatoren 17. Je nach Fahrsituation und Fehlfunktion wählt die Verarbeitungseinheit 121 in Abhängigkeit von den im Datenspeicher gespeicherten Daten der Aktuatoren 17 einen oder mehrere der Aktuatoren 17 aus. Anschließend wird für den oder die ausgewählten Aktuatoren 17 eine Stellgröße durch eine nicht dargestellte Recheneinrichtung der Verarbeitungseinheit 121 bestimmt und an den oder die Aktuatoren 17 ausgegeben. Mit anderen Worten werden der oder die Aktuatoren 17 auf Basis der Stellgröße durch die Verarbeitungseinheit 121 angesteuert. Die Aktuatoren 17 können dabei gleichzeitig oder abwechselnd nacheinander angesteuert werden.

Die Verarbeitungseinheit 121 steuert den oder die Aktuatoren 17 derart an, dass im Zusammenwirken aller ausgewählter Aktuatoren 17 die Abweichung des aktuellen Bahnverlaufs 16 vom zu erwartenden Bahnverlauf verringert bzw. verkleinert wird. Mit anderen Worten steuert die Verarbeitungseinheit 121 die ausgewählten Aktuatoren 17 derart an, dass der aktuelle Bahnverlauf 16 vom zu erwartenden Bahnverlauf mit einer möglichst geringen Abweichung erhalten bleibt. Vorzugsweise weicht der aktuelle Bahnverlauf 16 vom erwarteten Bahnverlauf weniger als 10% ab. Besonders bevorzugt weicht der aktuelle Bahnverlauf 16 vom erwarteten Bahnverlauf weniger als 5% ab.

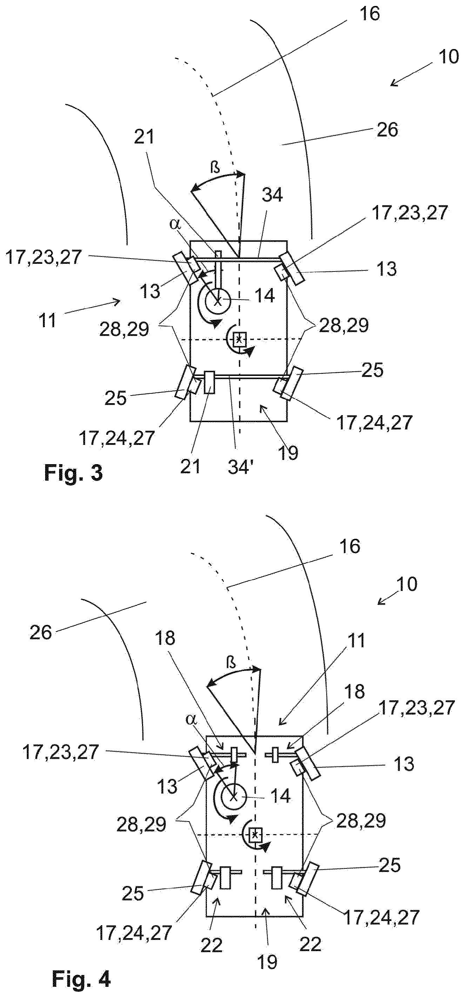

In Fig. 3 ist das Kraftfahrzeuglenksystem 10 gemäß Fig. 2 in einem Zustand einer Fehlfunktion der Vorderradlenkeinheit 11 gezeigt. Hierbei ist zu erkennen, dass die Verarbeitungseinheit 121 die Achslenkeinrichtung 21 der Hinterradlenkeinheit 19 ansteuert und eine entsprechende Lenkstellung auf die beiden Hinterräder 25 überträgt. Dadurch wird im Fahrbetrieb die festgestellte Abweichung des aktuellen Bahnverlaufs 16 vom zu erwartenden Bahnverlauf verringert.

Es ist denkbar, dass die Verarbeitungseinheit 121 zusätzlich wenigstens einen der Einzelradantriebe 27 und/oder eine der Einzelradbremsen 29 ansteuert und so die Abweichung des aktuellen Bahnverlaufs 16 vom erwarteten Bahnverlauf gering hält. Des Weiteren ist denkbar, dass die Verarbeitungseinheit 121 wenigstens einen Schwingungsdämpfer 400, insbesondere einen Stoßdämpfer 401, und/oder wenigstens eine Fahrzeugfeder 402 derart ansteuert, dass diese auf wenigstens eines der Räder 13, 25 lenkbeinflussend einwirken. Zusätzlich oder alternativ können Einzelrad-Hilfslenkaktuatoren vorgesehen sein, die über Ansteuerung durch die Verarbeitungseinheit 121 lenkbeeinflussend auf wenigstens eines der Räder 13, 25 einwirken.

Im Unterschied zum Kraftfahrzeuglenksystem 10 gemäß Fig. 2 und 3 sind beim Kraftfahrzeuglenksystem 10 gemäß Fig. 4 anstatt bei der Vorderrad- und der Hinterradlenkeinheit 11, 19 keine Achslenkeinrichtungen, sondern Einzelradlenkeinrichtungen 18, 22 vorgesehen. Gemäß Fig. 4 ist den Vorderrädern 13 und den Hinterrädern 25 jeweils eine Einzelradlenkeinrichtung 18 zugeordnet. Die Einzelradlenkeinrichtungen 18 der Vorderradlenkeinheit 11 übertragen im Fahrbetrieb eine Lenkstellung auf die Vorderräder 13 separat bzw. unabhängig voneinander.

In Fig. 4 ist das Kraftfahrzeuglenksystem 10 gemäß Fig. 2 in einem Zustand einer Fehlfunktion der Vorderradlenkeinheit 11 gezeigt. Hierbei ist zu erkennen, dass die Verarbeitungseinheit 121 die beiden Einzelradlenkeinrichtungen 22 der Hinterradlenkeinheit 19 ansteuert und eine entsprechende Lenkstellung auf die beiden Hinterräder 25 überträgt. Dadurch wird im Fahrbetrieb die festgestellte Abweichung des aktuellen Bahnverlaufs 16 vom zu erwartenden Bahnverlauf verringert.

Auch in diesem Ausführungsbeispiel ist es denkbar und möglich, dass die Verarbeitungseinheit 121 zusätzlich wenigstens einen Schwingungsdämpfer 400, insbesondere einen Stoßdämpfer 401, und/oder wenigstens eine Fahrzeugfeder 402 derart ansteuert, dass diese auf wenigstens eines der Räder 13, 25 lenkbeeinflussend einwirken.

Hinsichtlich der weiteren Aktuatoren 17, insbesondere Einzelradantriebe 27 und Einzelradbremsen 29 etc., die von der Verarbeitungseinheit 121 zur Lenkbeeinflussung angesteuert werden, wird auf die Beschreibung der Fig. 3 verwiesen.

### Bezugszeichenliste

- 10: Kraftfahrzeuglenksystem
- 11: Vorderradlenkeinheit
- 12: Lenksteuereinheit
- 13: Vorderräder
- 14: Lenkrad
- 15: Lenkstelleinrichtung
- 16: Bahnverlauf
- 17: Aktuator
- 18: Einzelradlenkeinrichtung der Vorderradlenkeinheit
- 19: Hinterradlenkeinheit
- 21: Achslenkeinrichtung
- 22: Einzelradlenkeinrichtung der Hinterradlenkeinheit
- 23: Lenkwelle
- 24: Feedback-Aktuator
- 25: Hinterräder
- 26: Fahrbahn
- 27: Einzelradantrieb
- 28: Spurstange
- 29: Einzelradbremse
- 34: Lenkstangen-Lenkgetriebe der Vorderradlenkeinheit
- 34': Lenkstangen-Lenkgetriebe der Hinterradlenkeinheit
- 36: Signalleitungen
- 110: Kraftfahrzeug
- 122: Datenspeicher
- 123: Sensor zur Erfassung der Fahrgeschwindigkeit
- 124: Drehwinkelsensor
- 125: Fahrzeugsteuerung
- 126: Sensor zur Erfassung Lenkwinkel Räder
- 151: Zahnstange
- 400: Schwingungsdämpfer
- 401: Stoßdämpfer
- 402: Fahrzeugfeder
- α: Lenkwinkel
- β: Fahrzeugwinkel

## Patentansprüche

1. Kraftfahrzeuglenksystem (10) eines Kraftfahrzeuges mit einer Vorderradlenkeinheit (11), einer Lenksteuereinheit (12), zwei Vorderrädern (13) und einem oder mehreren Hinterrädern (25), wobei die Vorderradlenkeinheit (11) ein Lenkrad (14) und wenigstens eine Lenkstelleinrichtung (15) aufweist, die mit wenigstens einem der Vorderräder (13) zur Übertragung einer Lenkbewegung gekoppelt ist, wobei die Lenksteuereinheit (12) mit dem Lenkrad (14) zur Erfassung eines Lenkwinkels (α) signalverbunden ist und die Lenksteuereinheit (12) dazu konfiguriert ist, den Lenkwinkel (α) des Lenkrades (14) zu erfassen und die Lenkstelleinrichtung (15) derart anzusteuern, dass die Lenkstelleinrichtung (15) den erfassten Lenkwinkel (α) auf das wenigstens eine Vorderrad (13) überträgt, wobei mindestens zwei Aktuatoren (17) vorgesehen sind, die dazu angepasst sind, auf eines oder beide der Vorderräder (13) und/oder auf eines oder mehrerer der Hinterräder (25) einzuwirken,
wobei die Lenksteuereinheit (12) eine Verarbeitungseinheit (121) aufweist, die dazu konfiguriert ist:
- in einem Fahrbetrieb einen aktuellen Bahnverlauf (16) des Kraftfahrzeugs zu bestimmen;
- im Fahrbetrieb eine Fehlfunktion der Vorderradlenkeinheit (11) und/oder der Lenksteuereinheit (12) zu detektieren;
- im Falle der Detektion einer Fehlfunktion wenigstens einen der Aktuatoren (17) auszuwählen; und
- den wenigstens einen ausgewählten Aktuator (17) anzusteuern, sodass im Fahrbetrieb der aktuelle Bahnverlauf (16) des Kraftfahrzeugs mit einer geringen Abweichung erhalten bleibt, **dadurch gekennzeichnet, dass**
- das Kraftfahrzeuglenksystem mit einem Datenspeicher ausgestattet ist, wobei
- die Lenksteuereinheit (12) mit dem Datenspeicher (122) signalverbunden ist und in dem Daten zu den Aktuatoren (17) hinterlegt sind, wobei
- im Datenspeicher Daten der Aktuatoren betreffend die Reaktionszeit, Wirkungsweise und/oder Verfügbarkeit gespeichert sind, und/oder im Datenspeicher Tabellenwerte zu Steuergrößen und/oder Daten zur Erreichung bestimmter Lenkwinkelwerte gespeichert sind, wobei
- die Verarbeitungseinheit dazu konfiguriert ist, die Daten aus dem Datenspeicher auszulesen und einen oder mehrere Aktuatoren abhängig von einer jeweiligen Fehlfunktion und/oder einer Fahrsituation auszuwählen, so dass durch die hinterlegten Daten bei einer Fehlfunktion der oder die für die entsprechende Fahrsituation am besten geeigneten Aktuatoren ermittelt und ausgewählt werden.

2. Kraftfahrzeuglenksystem nach Anspruch 1,
**dadurch gekennzeichnet, dass**
genau zwei Aktuatoren (17) vorgesehen sind, die dazu angepasst sind, auf eines oder beide der Vorderräder (13) und/oder auf ein oder mehrere der Hinterräder (25) einzuwirken.

3. Kraftfahrzeuglenksystem nach einem der vorhergehenden Ansprüche,
**dadurch gekennzeichnet, dass**
für jedes der Vorderräder (13) und für jedes der Hinterräder (25) jeweils mindestens zwei Aktuatoren (17) vorgesehen sind, die dazu angepasst sind, auf das jeweilige Rad (13, 25) einzuwirken.

4. Kraftfahrzeuglenksystem nach einem der vorhergehenden Ansprüche,
**dadurch gekennzeichnet, dass**
wenigstens einer der Aktuatoren (17) Teil einer Einzelradlenkeinrichtung (18) der Vorderradlenkeinheit (11) ist, wobei der Aktuator (17) mit einem Vorderrad (13) gekoppelt ist und/oder, dass
wenigstens einer der Aktuatoren (17) Teil einer Hinterradlenkeinheit (19) ist, wobei der Aktuator (17) mit wenigstens einem Hinterrad (25) gekoppelt ist.

5. Kraftfahrzeuglenksystem nach einem der vorhergehenden Ansprüche,
**dadurch gekennzeichnet, dass**
wenigstens einer der Aktuatoren (17) ein Vorderradantrieb und/oder ein Hinterradantrieb ist, der mit wenigstens einem der Räder (13, 25) drehmomentübertragend gekoppelt ist und/oder, dass
wenigstens einer der Aktuatoren (17) Teil einer Bremseinheit ist, die mit wenigstens einem der Vorderräder (13) und/oder wenigstens einem der Hinterräder (25) bremskraftübertragend koppelbar ist.

6. Kraftfahrzeuglenksystem nach einem der vorhergehenden Ansprüche,
**dadurch gekennzeichnet, dass**
wenigstens einer der Aktuatoren (17) Teil einer Achslenkeinrichtung ist, die mit wenigstens einem der Vorderräder (13) oder wenigstens einem der Hinterräder (25) über eine Achsgeometrie koppelbar ist und/oder über einen Schwingungsdämpfer (400) und/oder über eine Fahrzeugfeder (402) wirkverbindbar ist.

7. Kraftfahrzeug mit wenigstens einem Kraftfahrzeuglenksystem (10) nach einem der Ansprüche 1 bis 6.

8. Verfahren zur Steuerung eines Kraftfahrzeuglenksystems (10) eines Kraftfahrzeuges gemäß mindestens einem der vorhergehenden Ansprüche mit einer Einrichtung zur Ermittlung der Fahrgeschwindigkeit des Kraftfahrzeugs, einer Vorderradlenkeinheit (11), einer Lenksteuereinheit (12), zwei Vorderrädern (13) und einem oder mehreren Hinterrädern (25), wobei die Vorderradlenkeinheit (11) ein Lenkrad (14) und wenigstens eine Lenkstelleinrichtung (15) aufweist, die mit wenigstens einem der Vorderräder (13) zur Übertragung einer Lenkbewegung gekoppelt ist, wobei die Lenksteuereinheit (12) mit dem Lenkrad (14) zur Erfassung eines Lenkwinkels (α) signalverbunden ist, wobei die Lenksteuereinheit (12) den Lenkwinkel (α) des Lenkrades (14) erfasst und die Lenkstelleinrichtung (15) derart ansteuert, dass die Lenkstelleinrichtung (15) den erfassten Lenkwinkel (α) auf das wenigstens eine Vorderrad (13) überträgt, wobei mindestens zwei Aktuatoren (17) vorgesehen sind, die auf eines oder beide der Vorderräder (13) und/oder auf eines oder mehrere der Hinterräder (25) einwirken, wobei das Verfahren zur Steuerung folgende Schritte aufweist:
- Fortlaufendes Ermitteln eines aktuellen Bahnverlaufs (16) und einer Fahrgeschwindigkeit des Kraftfahrzeugs in einem Fahrbetrieb des Kraftfahrzeugs;
- Fortlaufendes Bestimmen während des Fahrbetriebs, ob der ermittelte aktuelle Bahnverlauf (16) mit dem über das Lenkrad (14) aufgeprägten Verlauf des Lenkwinkels (α) korreliert, wobei aus dem aufgeprägten Lenkwinkelverlauf und einem ermittelten Fahrgeschwindigkeitsverlauf ein zu erwartender Bahnverlauf ermittelt wird;
- Ermitteln eines Zustands einer Fehlfunktion, für den Fall, dass eine Abweichung zwischen dem zu erwartenden Bahnverlauf und dem ermittelten aktuellen Bahnverlauf (16) grösser als ein vordefinierter Wert ist;
- Auswählen eines oder mehrerer der Aktuatoren (17) aus einer Anzahl von verfügbaren Aktuatoren (17), für den Fall, dass eine Fehlfunktion ermittelt ist wobei die Daten aus dem Datenspeicher ausgelesen und einen oder mehrere Aktuatoren abhängig von einer jeweiligen Fehlfunktion und/oder einer Fahrsituation ausgewählt werden, so dass durch die hinterlegten Daten bei einer Fehlfunktion der oder die für die entsprechende Fahrsituation am besten geeigneten Aktuatoren ermittelt und ausgewählt werden;
- Bestimmen einer Stellgrösse für jeden Aktuator (17) durch eine Recheneinrichtung und Ausgeben der Stellgrösse an den jeweiligen Aktuator (17) derart, dass in Zusammenwirken aller jeweils zum Einsatz kommender ausgewählter, Aktuatoren (17) die Abweichung des ermittelten aktuellen Bahnverlaufs (16) vom erwarteten Bahnverlauf verringert wird.

9. Verfahren nach Anspruch 8,
**dadurch gekennzeichnet, dass**
ein Datenspeicher (122) und eine Verarbeitungseinheit (121) vorgesehen sind, wobei im Datenspeicher (122) Eingangsgrössen und/oder Stellcharakteristika für einen oder mehrere der Aktuatoren (17) hinterlegt sind und die Verarbeitungseinheit (121) aus den hinterlegten Daten geeignete Stellgrössen für die Aktuatoren (17) auswählt.

10. Verfahren nach einem der vorhergehenden Ansprüche 8 und 9,
**dadurch gekennzeichnet, dass**
die Verarbeitungseinheit (121) einen Betriebszustand der Lenksteuereinheit (12) und/oder der Vorderradlenkeinheit (11) und/oder einen Betriebszustand zumindest zwei der vorhandenen Aktuatoren (17) ausliest und auf Basis dieser Betriebszustände die jeweiligen Aktuatoren (17) aus den mehreren Aktuatoren (17) auswählt, um im Fahrbetrieb bei einer Fehlfunktion die Abweichung des ermittelten aktuellen Bahnverlaufs (16) vom zu erwartenden Bahnverlauf gering zu halten.

11. Verfahren nach einem der vorhergehenden Ansprüche 8 bis 10,
**dadurch gekennzeichnet, dass**
wenigstens einer der Aktuatoren (17) Teil einer Einzelradlenkeinrichtung (18) der Vorderradlenkeinheit (11) oder einer Hinterradlenkeinheit (19) ist, wobei die Verarbeitungseinheit (121) über den jeweiligen Aktuator (17) eine Lenkbewegung auf wenigstens eines der Vorderräder (13) und/oder wenigstens eines der Hinterräder (25) einprägt und/oder dass wenigstens einer der Aktuatoren (17) Teil einer Hinterradlenkeinheit (19) ist, wobei der Aktuator (17) mit wenigstens einem Hinterrad (25) gekoppelt ist/wird, wobei die Verarbeitungseinheit (121) über den jeweiligen Aktuator (17) eine Lenkbewegung auf das gekoppelte Hinterrad (25) einprägt.

12. Verfahren nach einem der vorhergehenden Ansprüche 8 bis 11,
**dadurch gekennzeichnet, dass**
wenigstens einer der Aktuatoren (17) ein Vorderradantrieb ist, der mit wenigstens einem der Vorderräder (13) drehmomentübertragend gekoppelt ist/wird, wobei die Verarbeitungseinheit (121) über den jeweiligen Aktuator (17) ein Antriebsmoment auf das gekoppelte Vorderrad (13) einprägt und/oder dass
wenigstens einer der Aktuatoren (17) ein Hinterradantrieb ist, der mit wenigstens einem der Hinterräder (14) drehmomentübertragend gekoppelt ist/wird, wobei die Verarbeitungseinheit (121) über den jeweiligen Aktuator (17) ein Antriebsmoment auf das gekoppelte Hinterrad (14) einprägt.

13. Verfahren nach einem der vorhergehenden Ansprüche 8 bis 12,
**dadurch gekennzeichnet, dass**
wenigstens einer der Aktuatoren (17) Teil einer Bremseinheit ist, die mit wenigstens einem der Vorderräder (13) oder wenigstens einem der Hinterräder (25) bremskraftübertragend gekoppelt wird, wobei die Verarbeitungseinheit (121) über den jeweiligen Aktuator (17) ein Bremsmoment auf das gekoppelte Vorderrad (13) und/oder das gekoppelte Hinterrad (14) einprägt und/oder dass
wenigstens einer der Aktuatoren (17) Teil einer Achssteuereinheit ist, die mit wenigstens einem der Vorderräder (13) oder wenigstens einem der Hinterräder (25) über eine Achsgeometrie gekoppelt wird und/oder über wenigstens eines Schwingungsdämpfers (400) und/oder über wenigstens eine Fahrzeugfeder (402) wirkverbunden wird, wobei die Verarbeitungseinheit (121) über den jeweiligen Aktuator (17) eine Stellgrösse zur Veränderung der Achsgeometrie und/oder des Schwingungsdämpfers (400) und/oder der Fahrzeugfeder (402) einleitet, um auf das gekoppelte Vorderrad (13) und/oder auf das gekoppelte Hinterrad (14) eine lenkwirksame Bewegung einzuprägen.

## Claims

1. Motor vehicle steering system (10) of a motor vehicle having a front wheel steering unit (11), a steering control unit (12), two front wheels (13) and one or more rear wheels (25), wherein the front wheel steering unit (11) having a steering wheel (14) and at least one steering control device (15) which is coupled to at least one of the front wheels (13) for transmitting a steering movement, wherein the steering control unit (12) is signal-connected to the steering wheel (14) for detecting a steering angle (α) and the steering control unit (12) is configured for this purpose, detecting the steering angle (α) of the steering wheel (14) and actuating the steering control unit (15) in such a way that the steering control unit (15) transmits the detected steering angle (α) to the at least one front wheel (13), wherein at least two actuators (17) are provided which are adapted to act on one or both of the front wheels (13) and/or on one or more of the rear wheels (25),
wherein
the steering control unit (12) has a processing unit (121) configured for this purpose
- to determine a current trajectory (16) of the motor vehicle in a driving mode;
- to detect a malfunction of the front wheel steering unit (11) and/or the steering control unit (12) during driving;
- selecting at least one of the actuators (17) in the event of detection of a malfunction; and
- to control the at least one selected actuator (17) so that the current trajectory (16) of the motor vehicle is maintained with a small deviation during driving, **characterised in that**
- the motor vehicle steering system is equipped with a data memory, whereby
- the steering control unit (12) is signal-connected to the data memory (122) and in which data relating to the actuators (17) are stored, wherein
- data of the actuators relating to the reaction time, mode of operation and/or availability are stored in the data memory, and/or table values for control variables and/or data for achieving specific steering angle values are stored in the data memory, wherein
- the processing unit is configured to read the data from the data memory and to select one or more actuators depending on a respective malfunction and/or a driving situation, so that the stored data is used to determine and select the actuator or actuators best suited for the corresponding driving situation in the event of a malfunction.

2. Motor vehicle steering system according to claim 1
**characterised in that**
exactly two actuators (17) are provided, which are adapted to act on one or both of the front wheels (13) and/or on one or more of the rear wheels (25)

3. Motor vehicle steering system according to one of the preceding claims,
**characterised in that**
at least two actuators (17) are provided for each of the front wheels (13) and for each of the rear wheels (25), which are adapted to act on the respective wheel (13, 25).

4. Motor vehicle steering system according to one of the preceding claims,
**characterised in that**
at least one of the actuators (17) is part of an individual wheel steering device (18) of the front wheel steering unit (11), the actuator (17) being coupled to a front wheel (13), and/or **in that**
at least one of the actuators (17) is part of a rear wheel steering unit (19), wherein the actuator (17) is coupled to at least one rear wheel (25).

5. Motor vehicle steering system according to one of the preceding claims,
**characterised in that**
at least one of the actuators (17) is a front-wheel drive and/or a rear-wheel drive which is coupled to at least one of the wheels (13, 25) in a torque-transmitting manner, and/or **in that**
at least one of the actuators (17) is part of a brake unit which can be coupled to at least one of the front wheels (13) and/or at least one of the rear wheels (25) in such a way as to transmit braking force.

6. Motor vehicle steering system according to one of the preceding claims,
**characterised in that**
at least one of the actuators (17) is part of an axle steering device which can be coupled to at least one of the front wheels (13) or at least one of the rear wheels (25) via an axle geometry and/or can be operatively connected via a vibration damper (400) and/or via a vehicle spring (402).

7. Motor vehicle with at least one motor vehicle steering system (10) according to one of claims 1 to 6.

8. Method for controlling a motor vehicle steering system (10) of a motor vehicle according to at least one of the preceding claims, having a device for determining the travelling speed of the motor vehicle, a front wheel steering unit (11), a steering control unit (12), two front wheels (13) and one or more rear wheels (25), wherein the front wheel steering unit (11) having a steering wheel (14) and at least one steering control device (15) which is coupled to at least one of the front wheels (13) for transmitting a steering movement, wherein the steering control unit (12) is signal-connected to the steering wheel (14) for detecting a steering angle (α), wherein the steering control unit (12) detects the steering angle (α) of the steering wheel (14) and controls the steering control device (15) in such a way that the steering control unit (15) transmits the detected steering angle (α) to the at least one front wheel (13), wherein at least two actuators (17) are provided which act on one or both of the front wheels (13) and/or on one or more of the rear wheels (25), wherein the control method comprises the following steps:
- Continuous determination of a current trajectory (16) and a travelling speed of the motor vehicle in a driving mode of the motor vehicle;
- Continuous determination during driving operation of whether the determined current trajectory (16) correlates with the course of the steering angle (α) imprinted via the steering wheel (14), an expected trajectory being determined from the imprinted steering angle course and a determined driving speed course;
- Determining a state of a malfunction in the event that a deviation between the expected trajectory and the determined current trajectory (16) is greater than a predefined value;
- Selecting one or more of the actuators (17) from a number of available actuators (17) in the event that a malfunction is detected, wherein the data is read from the data memory and one or more actuators are selected depending on a respective malfunction and/or a driving situation, so that the stored data is used to determine and select the actuator or actuators best suited for the corresponding driving situation in the event of a malfunction;
- Determining a manipulated variable for each actuator (17) by a computing device and outputting the manipulated variable to the respective actuator (17) in such a way that the deviation of the determined current path (16) from the expected path is reduced in cooperation with all the selected actuators (17) used in each case.

9. Method according to claim 8,
**characterised in that**
a data memory (122) and a processing unit (121) are provided, wherein input variables and/or control characteristics for one or more of the actuators (17) are stored in the data memory (122) and the processing unit (121) selects suitable control variables for the actuators (17) from the stored data.

10. Method according to one of the preceding claims 8 and 9,
**characterised in that**
the processing unit (121) reads out an operating state of the steering control unit (12) and/or the front wheel steering unit (11) and/or an operating state of at least two of the actuators (17) present and, on the basis of these operating states, selects the respective actuators (17) from the plurality of actuators (17) in order to keep the deviation of the determined current trajectory (16) from the expected trajectory low during driving operation in the event of a malfunction.

11. Method according to one of the preceding claims 8 to 10,
**characterised in that**
at least one of the actuators (17) is part of an individual wheel steering device (18) of the front wheel steering unit (11) or of a rear wheel steering unit (19), wherein the processing unit (121) impresses a steering movement on at least one of the front wheels (13) and/or at least one of the rear wheels (25) via the respective actuator (17), and/or **in that** at least one of the actuators (17) is part of a rear-wheel steering unit (19), wherein the actuator (17) is/is coupled to at least one rear wheel (25), wherein the processing unit (121) imparts a steering movement to the coupled rear wheel (25) via the respective actuator (17).

12. Method according to one of the preceding claims 8 to 11,
**characterised in that**
at least one of the actuators (17) is a front-wheel drive which is/is coupled to at least one of the front wheels (13) in a torque-transmitting manner, the processing unit (121) applying a drive torque to the coupled front wheel (13) via the respective actuator (17), and/or **in that** at least one of the actuators (17) is a rear wheel drive which is/is coupled to at least one of the rear wheels (14) in a torque-transmitting manner, wherein the processing unit (121) applies a drive torque to the coupled rear wheel (14) via the respective actuator (17).

13. Method according to one of the preceding claims 8 to 12,
**characterised in that**
at least one of the actuators (17) is part of a brake unit which is coupled to at least one of the front wheels (13) or at least one of the rear wheels (25) in a brake force-transmitting manner, wherein the processing unit (121) applies a braking torque to the coupled front wheel (13) and/or the coupled rear wheel (14) via the respective actuator (17), and/or **in that** at least one of the actuators (17) is part of an axle control unit which is coupled to at least one of the front wheels (13) or at least one of the rear wheels (25) via an axle geometry and/or is operatively connected via at least one vibration damper (400) and/or via at least one vehicle spring (402), wherein the processing unit (121) introduces an actuating variable via the respective actuator (17) for changing the axle geometry and/or the vibration damper (400) and/or the vehicle spring (402) in order to impart a steering-effective movement to the coupled front wheel (13) and/or to the coupled rear wheel (14).

## Revendications

1. Système de direction (10) d'un véhicule automobile comprenant une unité de direction des roues avant (11), une unité de commande de direction (12), deux roues avant (13) et une ou plusieurs roues arrière (25)l'unité de direction des roues avant (11) présentant un volant de direction (14) et au moins un dispositif de réglage de direction (15), qui est couplé à au moins l'une des roues avant (13) pour transmettre un mouvement de direction, l'unité de commande de direction (12) étant reliée par signaux au volant (14) pour détecter un angle de direction (α) et l'unité de commande de direction (12) étant configurée à cet effet, détecter l'angle de braquage (α) du volant de direction (14) et commander le dispositif de réglage de la direction (15) de telle sorte que le dispositif de réglage de la direction (15) transmette l'angle de braquage (α) détecté à l'au moins une roue avant (13)au moins deux actionneurs (17) étant prévus, qui sont adaptés pour agir sur l'une ou les deux roues avant (13) et/ou sur une ou plusieurs des roues arrière (25),
où
l'unité de commande de direction (12) comprend une unité de traitement (121) configurée à cet effet
- déterminer une trajectoire actuelle (16) du véhicule automobile dans un mode de conduite ;
- de détecter un dysfonctionnement de l'unité de direction des roues avant (11) et/ou de l'unité de commande de direction (12) pendant la conduite ;
- sélectionner au moins l'un des actionneurs (17) en cas de détection d'un dysfonctionnement ; et
- commander l'au moins un actionneur (17) sélectionné, de sorte qu'en mode de conduite, la trajectoire (16) actuelle du véhicule automobile est conservée avec un faible écart, **caractérisé en ce que**
- le système de direction du véhicule automobile est équipé d'une mémoire de données, dans lequel
- l'unité de commande de direction (12) est reliée par signaux à la mémoire de données (122) et dans laquelle sont déposées des données concernant les actionneurs (17), sachant que
- des données des actionneurs concernant le temps de réaction, le mode d'action et/ou la disponibilité sont mémorisées dans la mémoire de données, et/ou des valeurs de tableau concernant des grandeurs de commande et/ou des données pour atteindre des valeurs d'angle de braquage déterminées sont mémorisées dans la mémoire de données , où
- l'unité de traitement est configurée pour lire les données dans la mémoire de données et pour sélectionner un ou plusieurs actionneurs en fonction d'un dysfonctionnement respectif et/ou d'une situation de conduite, de sorte que, grâce aux données stockées, le ou les actionneurs les mieux adaptés à la situation de conduite correspondante sont déterminés et sélectionnés en cas de dysfonctionnement

2. Système de direction de véhicule automobile selon la revendication 1
**caractérisé en ce que**
il est prévu exactement deux actionneurs (17) qui sont adaptés pour agir sur une ou sur les deux roues avant (13) et/ou sur une ou sur plusieurs des roues arrière (25)

3. Système de direction de véhicule automobile selon l'une quelconque des revendications précédentes, **caractérisé en ce que**
pour chacune des roues avant (13) et pour chacune des roues arrière (25), il est prévu respectivement au moins deux actionneurs (17) qui sont adaptés pour agir sur la roue respective (13, 25).

4. Système de direction de véhicule automobile selon l'une quelconque des revendications précédentes,
**caractérisé en ce que**
au moins un des actionneurs (17) fait partie d'un dispositif de direction de roue individuelle (18) de l'unité de direction de roue avant (11), l'actionneur (17) étant couplé à une roue avant (13) et/ou **en ce que** au moins un des actionneurs (17) fait partie d'une unité de direction de roue arrière (19), l'actionneur (17) étant couplé à au moins une roue arrière (25).

5. Système de direction de véhicule automobile selon l'une quelconque des revendications précédentes,
**caractérisé en ce que**
au moins l'un des actionneurs (17) est un entraînement des roues avant et/ou un entraînement des roues arrière, qui est couplé à au moins l'une des roues (13, 25) de manière à transmettre le couple et/ou **en ce que** au moins l'un des actionneurs (17) fait partie d'une unité de freinage qui peut être couplée à au moins l'une des roues avant (13) et/ou à au moins l'une des roues arrière (25) en transmettant la force de freinage.

6. Système de direction de véhicule automobile selon l'une quelconque des revendications précédentes,
**caractérisé en ce que**
au moins l'un des actionneurs (17) fait partie d'un dispositif de direction d'essieu qui peut être couplé à au moins l'une des roues avant (13) ou à au moins l'une des roues arrière (25) par l'intermédiaire d'une géométrie d'essieu et/ou qui peut être relié fonctionnellement par l'intermédiaire d'un amortisseur de vibrations (400) et/ou d'un ressort de véhicule (402).

7. Véhicule automobile comportant au moins un système de direction de véhicule automobile (10) selon l'une quelconque des revendications 1 à 6.

8. Procédé de commande d'un système de direction (10) d'un véhicule automobile selon au moins l'une des revendications précédentes, comprenant un dispositif de détermination de la vitesse de déplacement du véhicule automobile, une unité de direction des roues avant (11), une unité de commande de direction (12), deux roues avant (13) et une ou plusieurs roues arrière (25), l'unité de direction des roues avant (11) présentant un volant de direction (14) et au moins un dispositif de réglage de la direction (15) qui est couplé à au moins l'une des roues avant (13) pour transmettre un mouvement de direction, l'unité de commande de direction (12) étant reliée par signaux au volant de direction (14) pour détecter un angle de direction (α), l'unité de commande de direction (12) détectant l'angle de direction (α) du volant de direction (14) et commandant le dispositif de réglage de la direction (15) de telle sorte, que le dispositif de réglage de la direction (15) transmet l'angle de braquage (α) détecté à l'au moins une roue avant (13), au moins deux actionneurs (17) étant prévus, qui agissent sur l'une ou les deux roues avant (13) et/ou sur une ou plusieurs des roues arrière (25), le procédé de commande présentant les étapes suivantes :
- Détermination en continu d'une trajectoire actuelle (16) et d'une vitesse de déplacement du véhicule automobile dans un mode de déplacement du véhicule automobile ;
- Déterminer en continu pendant la conduite si la trajectoire actuelle déterminée (16) est en corrélation avec la courbe de l'angle de braquage (α) imposée par le volant (14), une trajectoire à attendre étant déterminée à partir de la courbe de l'angle de braquage imposée par et d'une courbe de vitesse de conduite déterminée ;
- Détermination d'un état d'un dysfonctionnement, pour le cas où un écart entre la trajectoire attendue et la trajectoire actuelle déterminée (16) est supérieur à une valeur prédéfinie ;
- sélectionner un ou plusieurs des actionneurs (17) parmi un certain nombre d'actionneurs (17) disponibles, dans le cas où un dysfonctionnement est déterminé, les données étant lues dans la mémoire de données et un ou plusieurs actionneurs étant sélectionnés en fonction d'un dysfonctionnement respectif et/ou d'une situation de conduite, de sorte que, grâce aux données enregistrées, le ou les actionneurs les plus appropriés pour la situation de conduite correspondante sont déterminés et sélectionnés en cas de dysfonctionnement ;
- déterminer une grandeur de réglage pour chaque actionneur (17) par un dispositif de calcul et délivrer la grandeur de réglage à l'actionneur respectif (17) de telle sorte que, en coopération avec tous les actionneurs sélectionnés (17) utilisés, l'écart entre la trajectoire actuelle déterminée (16) et la trajectoire attendue est réduit.

9. Procédé selon la revendication 8,
**caractérisé en ce que**
une mémoire de données (122) et une unité de traitement (121) sont prévues, des grandeurs d'entrée et/ou des caractéristiques de réglage pour un ou plusieurs des actionneurs (17) étant enregistrées dans la mémoire de données (122) et l'unité de traitement (121) sélectionnant des grandeurs de réglage appropriées pour les actionneurs (17) à partir des données enregistrées.

10. Procédé selon l'une quelconque des revendications 8 et 9 précédentes,
**caractérisé en ce que**
l'unité de traitement (121) lit un état de fonctionnement de l'unité de commande de direction (12) et/ou de l'unité de direction des roues avant (11) et/ou un état de fonctionnement d'au moins deux des actionneurs (17) présents et, sur la base de ces états de fonctionnement, sélectionne les actionneurs (17) respectifs parmi la pluralité d'actionneurs (17) afin de maintenir, en mode de conduite, en cas de dysfonctionnement , un faible écart entre la trajectoire actuelle (16) déterminée et la trajectoire attendue.

11. Procédé selon l'une quelconque des revendications précédentes 8 à 10,
caractérisé e n ce que
au moins un des actionneurs (17) fait partie d'un dispositif de direction des roues individuelles (18) de l'unité de direction des roues avant (11) ou d'une unité de direction des roues arrière (19), l'unité de traitement (121) imprimant un mouvement de direction sur au moins une des roues avant (13) et/ou au moins une des roues arrière (25) par l'intermédiaire de l'actionneur respectif (17) et/ou en ce que
au moins l'un des actionneurs (17) fait partie d'une unité de direction des roues arrière (19), l'actionneur (17) étant/étant couplé à au moins une roue arrière (25), l'unité de traitement (121) imprimant un mouvement de direction sur la roue arrière couplée (25) par l'intermédiaire de l'actionneur respectif (17).

12. Procédé selon l'une quelconque des revendications précédentes 8 à 11,
**caractérisé en ce que**
au moins l'un des actionneurs (17) est un entraînement de roue avant qui est/est couplé avec transmission de couple à au moins l'une des roues avant (13), l'unité de traitement (121) imprimant un couple d'entraînement sur la roue avant couplée (13) par l'intermédiaire de l'actionneur respectif (17) et/ou **en ce que**
au moins l'un des actionneurs (17) est un entraînement de roue arrière qui est/est couplé à au moins l'une des roues arrière (14) en transmettant le couple, l'unité de traitement (121) imprimant un couple d'entraînement sur la roue arrière couplée (14) par l'intermédiaire de l'actionneur respectif (17).

13. Procédé selon l'une quelconque des revendications précédentes 8 à 12,
**caractérisé en ce que**
au moins un des actionneurs (17) fait partie d'une unité de freinage qui est couplée à au moins une des roues avant (13) ou à au moins une des roues arrière (25) en transmettant la force de freinage, l'unité de traitement (121) appliquant un couple de freinage à la roue avant (13) couplée et/ou à la roue arrière (14) couplée par l'intermédiaire de l'actionneur (17) respectif et/ou **en ce que**
au moins un des actionneurs (17) fait partie d'une unité de commande d'essieu qui est couplée à au moins une des roues avant (13) ou à au moins une des roues arrière (25) par l'intermédiaire d'une géométrie d'essieu et/ou est en liaison active par l'intermédiaire d'au moins un amortisseur de vibrations (400) et/ou par l'intermédiaire d'au moins un ressort de véhicule (402), l'unité de traitement (121) introduisant, par l'intermédiaire de l'actionneur respectif (17), une grandeur de réglage pour modifier la géométrie de l'essieu et/ou l'amortisseur de vibrations (400) et/ou le ressort du véhicule (402), afin d'imprimer un mouvement ayant un effet sur la direction à la roue avant couplée (13) et/ou à la roue arrière couplée (14).
